# EUROPÄISCHE PATENTSCHRIFT

(11) **EP 4 591 692 B1**
(45) Veröffentlichungstag und Bekanntmachung des Hinweises auf die Patenterteilung: **12.08.2026**
(21) Anmeldenummer: 24216809.4
(22) Anmeldetag: 02.12.2024
(51) Int. Cl.: A01B 59/042, B60D 1/155, B60D 1/00

(54) **KUPPLUNGSANORDNUNG FÜR EINEN LANDWIRTSCHAFTLICHEN TRAKTOR**
COUPLING ASSEMBLY FOR AN AGRICULTURAL TRACTOR
ENSEMBLE D'ACCOUPLEMENT POUR TRACTEUR AGRICOLE

(30) Priorität: 26.01.2024 DE 102024102279
(43) Veröffentlichungstag der Anmeldung: 30.07.2025
(73) Patentinhaber: Deere & Company, Moline, IL 61265 (US)
(72) Erfinder: ECKSTEIN, CHRISTIAN, 68163 Mannheim (DE); PATINO, MARIO, 68163 Mannheim (DE); HEITLINGER, MARTIN, 68163 Mannheim (DE); SPOHN, BENJAMIN, 68163 Mannheim (DE); HINGNE, ABHIJIT, 68163 Mannheim (DE)
(74) Vertreter: Dehnhardt, Florian Christopher

(56) Entgegenhaltungen:
- EP-A1- 3 549 797
- EP-A1- 3 821 687
- EP-B1- 1 216 856
- DE-A1- 102023 104 695

## Beschreibung

Die Erfindung betrifft eine Kupplungsanordnung für einen landwirtschaftlichen Traktor, umfassend eine Zugstange mit einem ersten Stangenabschnitt, der in einer Halterung zur Anbringung auf einer Unterseite eines Zapfwellengetriebegehäuses des landwirtschaftlichen Traktors entlang eines vorgegebenen Verstellbereichs längsverschiebbar gelagert ist, und einen dem ersten Stangenabschnitt gegenüberliegenden zweiten Stangenabschnitt, der innerhalb angrenzender oberer und unterer Stützwangen einer Kupplungsträgerplatte geführt ist und sich darin mittels eines Sicherungselements in einer von mehreren Kupplungspositionen entlang des vorgegebenen Verstellbereichs festlegen lässt.

Eine derartige Kupplungsanordnung ist beispielsweise bei landwirtschaftlichen Traktoren des Herstellers John Deere bekannt. Diese umfasst eine Zugstange mit einem ersten Stangenabschnitt und einem dem ersten Stangenabschnitt gegenüberliegenden zweiten Stangenabschnitt. Der erste Stangenabschnitt ist in einer Halterung auf der Unterseite eines Differentialgehäuses des landwirtschaftlichen Traktors gelagert und darin mittels eines abnehmbaren Zapfens, der sich durch eine in dem ersten Stangenabschnitt ausgebildete Bohrung erstreckt und mit dem Differentialgehäuse verschraubt ist, befestigt. Des Weiteren weist der zweite Stangenabschnitt im Bereich einer eine Kupplungskugel tragenden Stirnplatte linke und rechte Gewindebohrungen zur Aufnahme zugehöriger Sechskantbolzen auf, mittels derer die Stirnplatte mit einer im Heckbereich des landwirtschaftlichen Traktor vorgesehenen Kupplungsträgerplatte verschraubt ist. Die Zugstange lässt sich durch Lösen des Zapfens sowie der beiden Sechskantbolzen in einer von zwei unterschiedlichen Kupplungspositionen montieren, sodass verschiedenen Betriebssituationen eines an der Kupplungskugel angebrachten Anbaugeräts Rechnung getragen werden kann.

Konstruktionsbedingt wirken die beim Betrieb des Anbaugeräts an der Zugstange auftretenden Vertikalkräfte unmittelbar auf die mittels der beiden Sechskantbolzen hergestellte Schraubverbindung ein, sodass hier dementsprechend hohe Anzugsmomente erforderlich sind. Diese führen dazu, dass ein Umsetzen der Zugstange zwischen den beiden Kupplungspositionen nur mit entsprechend hohem Aufwand möglich ist und in der Regel einem Werkstattaufenthalt vorbehalten bleibt.

Um die Handhabung beim Umsetzen der Zugstange zu erleichtern, wird daher in der DE 10 2023 104 695 A1 vorgeschlagen, den zweiten Stangenabschnitt innerhalb angrenzender oberer und unterer Stützwangen einer zur heckseitigen Anbringung am landwirtschaftlichen Traktor vorgesehenen Kupplungsträgerplatte längsverschiebbar zu führen. Die Zugstange lässt sich in diesem Fall durch Längsverschiebung in mehrere Kupplungspositionen verbringen und darin gegenüber der Kupplungsträgerplatte mittels wenigstens eines Sicherungselements arretieren. Die Führung der Zugstange im Bereich des zweiten Stangenabschnitts mittels der beiden Stützwangen bzw. daran ausgebildeter oberer und unterer Gleitflächen stellt sicher, dass die beim Betrieb des Anbaugeräts an der Zugstange auftretenden Vertikalkräfte unmittelbar in die Kupplungsträgerplatte eingeleitet werden können. Damit stehen diese nicht länger in Zusammenhang mit den zur Arretierung der Zugstange an dem wenigstens einen Sicherungselement aufzubringenden Betätigungskräften, sodass sich letztere durch entsprechende Wahl bzw. konstruktive Ausführung des wenigstens einen Sicherungselements hinsichtlich einer komfortablen Handhabung der Zugstange beim Wechsel zwischen ihren verschiedenen Kupplungspositionen wunschgemäß vorgeben lassen. Weiterer relevanter Stand der Technik ist bspw. die EP 3 821 687 A1.

Davon ausgehend ist es Aufgabe der vorliegenden Erfindung, eine Kupplungsanordnung der eingangs genannten Art hinsichtlich ihrer Handhabung weiter zu optimieren.

Diese Aufgabe wird durch eine Kupplungsanordnung mit den Merkmalen des Patentanspruchs 1 gelöst.

Die Kupplungsanordnung für einen landwirtschaftlichen Traktor umfasst eine Zugstange mit einem ersten Stangenabschnitt, der in einer Halterung zur Anbringung auf einer Unterseite eines Zapfwellengetriebegehäuses des landwirtschaftlichen Traktors entlang eines vorgegebenen Verstellbereichs längsverschiebbar gelagert ist, und einen dem ersten Stangenabschnitt gegenüberliegenden zweiten Stangenabschnitt, der innerhalb angrenzender oberer und unterer Stützwangen einer Kupplungsträgerplatte geführt ist und sich darin mittels eines Sicherungselements in einer von mehreren Kupplungspositionen entlang des vorgegebenen Verstellbereichs festlegen lässt. Erfindungsgemäß ist vorgesehen, dass die Zugstange zumindest entlang des vorgegebenen Verstellbereichs als innerhalb der Halterung aufrecht verlaufendes I-Profil bzw. Doppel-T-Profil mit durch einen Steg verbundenen oberen und unteren Flanschen ausgebildet ist, wobei linke und rechte Wangen bzw. Innenvorsprünge an der Halterung derart auf beiden Seiten des Stegs des Doppel-T-Profils positioniert sind bzw. enden, dass eine Lateralführung der Zugstange innerhalb der Halterung gebildet ist.

Die Verwendung eines Doppel-T-Profils führt im Vergleich zu massiv ausgeführten Querschnittsformen, wie sie beispielsweise ein aus Vollmaterial bestehendes Rechteckprofil aufweist, nicht nur zu einer erhöhten Steifigkeit, sondern auch zu einer entsprechenden Gewichtsreduzierung der Zugstange, was die Materialkosten ebenso reduziert wie auch deren Handhabung weiter erleichtert.

Mittels des Sicherungselements lässt sich die Zugstange innerhalb der Kupplungsträgerplatte bezüglich der Einbaulage am landwirtschaftlichen Traktor horizontal sowohl in Längs- wie auch Querrichtung arretieren. Die vertikale Abstützung der Zugstange erfolgt im Wesentlichen mittels der an den zweiten Stangenabschnitt angrenzenden oberen und unteren Stützwangen der Kupplungsträgerplatte. Im Bereich der Halterung treten bei Verwendung am landwirtschaftlichen Traktor in erster Linie seitwärts gerichtete Zugkraftanteile auf, die aufgrund der mittels der Wangen bzw. Innenvorsprünge verwirklichten Lateralführung der Zugstange in die Halterung und von dort in das Zapfwellengetriebegehäuse eingeleitet werden.

Vorteilhafte Weiterbildungen der erfindungsgemäßen Kupplungsanordnung gehen aus den Unteransprüchen hervor.

Vorzugsweise ist der Verstellbereich bis zum offenen Ende des ersten Stangenabschnitts hin fortgeführt, sodass sich die Zugstange vollständig aus der Halterung herausziehen lässt. Dies erlaubt es, die Zugstange im Falle ihres Nichtgebrauchs oder eines wartungsbedingten Austauschs ohne Demontage der Halterung aus der Kupplungsanordnung vollständig zu entfernen.

Um eine möglichst gleichmäßige Einleitung der an der Zugstange betriebsbedingt auftretenden Vertikalkräfte in die der Halterung bzw. Kupplungsträgerplatte angrenzenden Tragestrukturen des landwirtschaftlichen Traktors sicherzustellen, besteht weiterhin die Möglichkeit, dass zur Bildung einer Gleitführung entlang des vorgegebenen Verstellbereichs an einer Außenseite des oberen und/oder unteren Flanschs eine ebene Lauffläche zur Anlage an einer Unterseite des Zapfwellengetriebegehäuses bzw. einer ebenen Gegenfläche an der Halterung vorgesehen ist.

Bei dem wenigstens einen Sicherungselement handelt es sich beispielsweise um einen gewindelosen Sicherungsbolzen, der sich zur Arretierung der Zugstange durch in der Kupplungsträgerplatte sowie dem zweiten Stangenabschnitt ausgebildete miteinander fluchtende Positionieröffnungen hindurchgeführt und darin mittels eines Splints oder dergleichen gesichert ist.

An dem typischerweise mit einem Handgriff versehenen Sicherungsbolzen ist insbesondere ein umlaufender Kragen ausgebildet, der sich in montiertem Zustand an einer Oberseite der Kupplungsträgerplatte abstützt und daran mittels einer Verdrehsicherung festgelegt ist, sodass die Einhaltung einer definierten Betriebsstellung des Handgriffs gewährleistet ist. Die Verdrehsicherung kann zum Beispiel durch eine an dem umlaufenden oberen Kragen vorgesehene Abflachung gebildet sein, an der ein an der Oberseite der Kupplungsträgerplatte vorgesehener Anschlag angreift.

Auch kann vorgesehen sein, dass an der Kupplungsträgerplatte linke und rechte Kufen zur Aufnahme in einem Schienensystemträger eines Traktorkupplungssystems ausgebildet sind. Der Schienensystemträger weist typischerweise die Gestalt eines im Heckbereich des landwirtschaftlichen Traktors an einem Differentialgehäuse montierten Anhängebocks auf. Der Anhängebock umfasst linke und rechte Rasterschienen, in die die Kufen der Kupplungsträgerplatte eingeführt und mittels mehrerer Gewindebolzen verschraubt sind.

An dem zweiten Stangenabschnitt kann ein Kupplungselement, das beispielsweise mit einem Kugelkopf ausgestattet ist, angebracht sein. Üblicherweise handelt es sich um einen sogenannten K80-Kugelkopf, der der Anbringung einer komplementären Kugelpfanne einer Anbaugerätekupplung dient. Der Kugelkopf kann hierbei an dem zweiten Stangenabschnitt bzw. dem Kupplungselement für die Zwecke eines wartungs- bzw. verschleißbedingten Austauschs abnehmbar montiert sein.

Des Weiteren können an dem zweiten Stangenabschnitt linke und rechte taschenförmige Ausnehmungen vorgesehen sein, die zur Herstellung einer lösbaren Schwalbenschwanzverbindung mit linken und rechten Zusatzkupplungselementen zur Betätigung einer von einem lenkbaren Anbaugerät umfassten Zwangslenkung ausgebildet sind. Jedes der Zusatzkupplungselemente trägt eine K50-Kugel, in die sich ein Lenkbetätigungsgestänge der Zwangslenkung einhängen lässt. Zur Sicherung der Schwalbenschwanzverbindung wird jedes der beiden Zusatzkupplungselemente zusätzlich mit dem zweiten Stangenabschnitt fest verschraubt. Bei dem lenkbaren Anbaugerät kann es sich beispielsweise um einen Transportanhänger oder ein Güllefass handeln.

Die erfindungsgemäße Kupplungsanordnung für einen landwirtschaftlichen Traktor wird im Folgenden anhand der Zeichnungen näher beschrieben. Dabei beziehen sich identische Bezugszeichen auf übereinstimmende oder bezüglich ihrer Funktion vergleichbare Komponenten. Es zeigen:
- Fig. 1: eine perspektivische Explosionsdarstellung eines Ausführungsbeispiels der erfindungsgemäßen Kupplungsanordnung für einen landwirtschaftlichen Traktor,
- Fig. 2: eine Darstellung der in Fig. 1 wiedergegebenen Kupplungsanordnung in zusammengebautem Zustand,
- Fig. 3: eine im Schnitt wiedergegebene Seitenansicht der in Fig. 2 gezeigten Kupplungsanordnung an einem Zapfwellengetriebegehäuse des landwirtschaftlichen Traktors in einer ersten Kupplungsposition,
- Fig. 4: eine im Schnitt wiedergegebene Seitenansicht der in Fig. 2 gezeigten Kupplungsanordnung an einem Zapfwellengetriebegehäuse des landwirtschaftlichen Traktors in einer zweiten Kupplungsposition,
- Fig. 5: die in Fig. 2 gezeigte Kupplungsanordnung, komplettiert mit daran angebrachten linken und rechten Zusatzkupplungselementen zur Betätigung einer von einem lenkbaren Anbaugerät umfassten Zwangslenkung, und
- Fig. 6: die in Fig. 5 gezeigte komplettierte Kupplungsanordnung von unten gesehen.

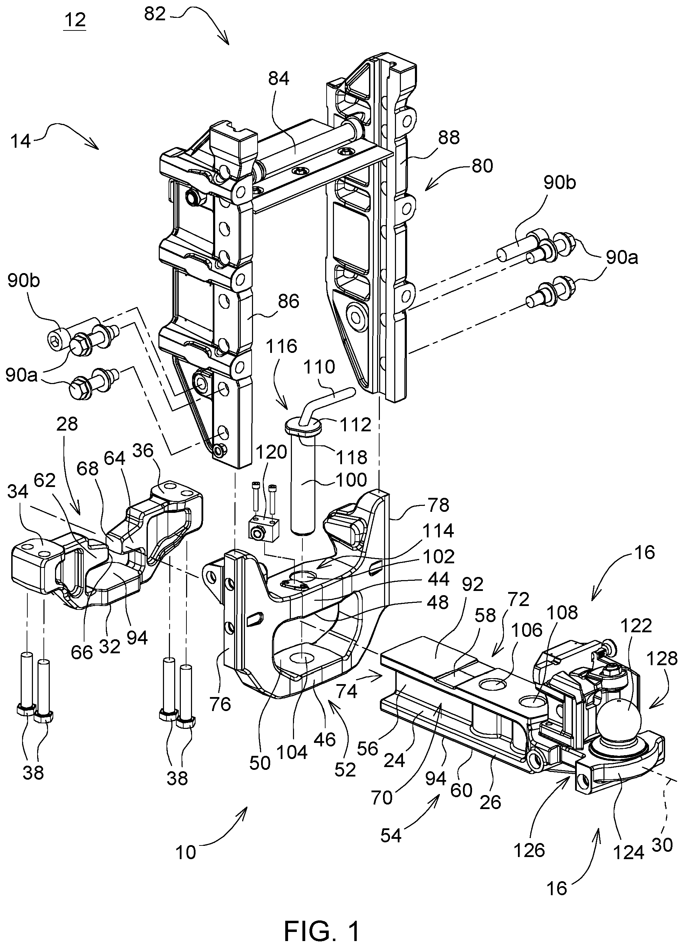

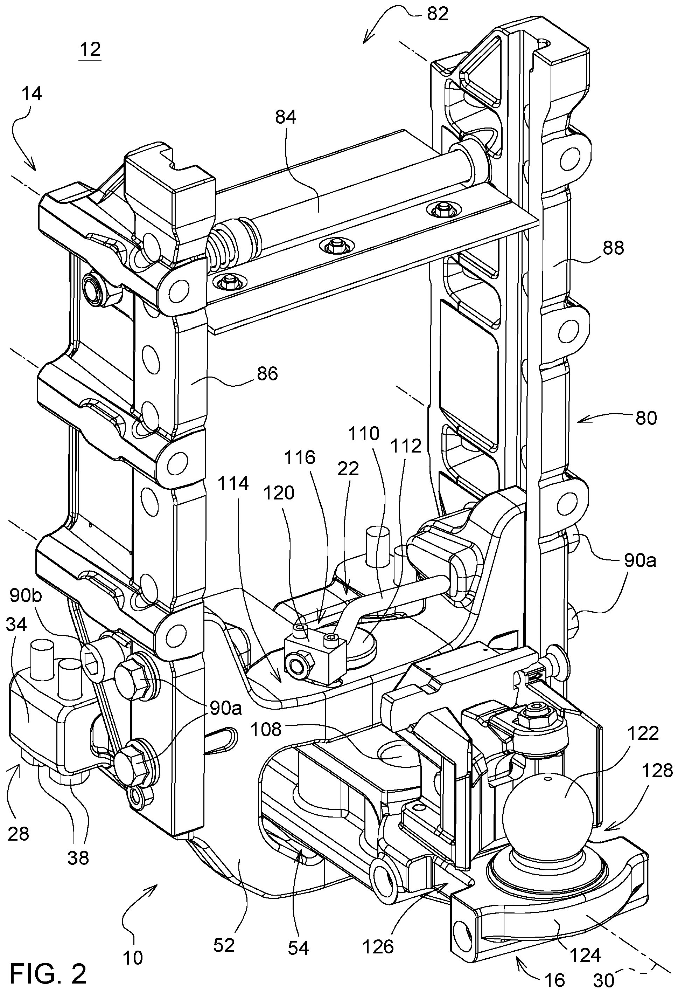

Fig. 1 und 2 zeigen verschiedene perspektivisch dargestellte Komplettansichten eines Ausführungsbeispiels der erfindungsgemäßen Kupplungsanordnung 10 für einen (lediglich zeichnerisch angedeuteten) landwirtschaftlichen Traktor 12 in Explosionsdarstellung sowie in zusammengebautem Zustand.

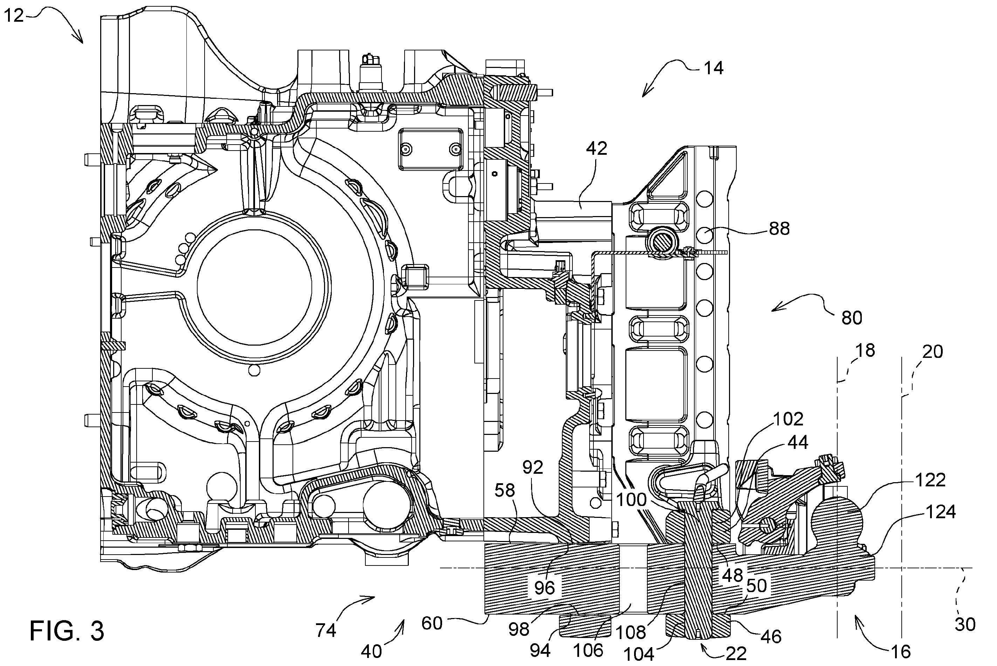

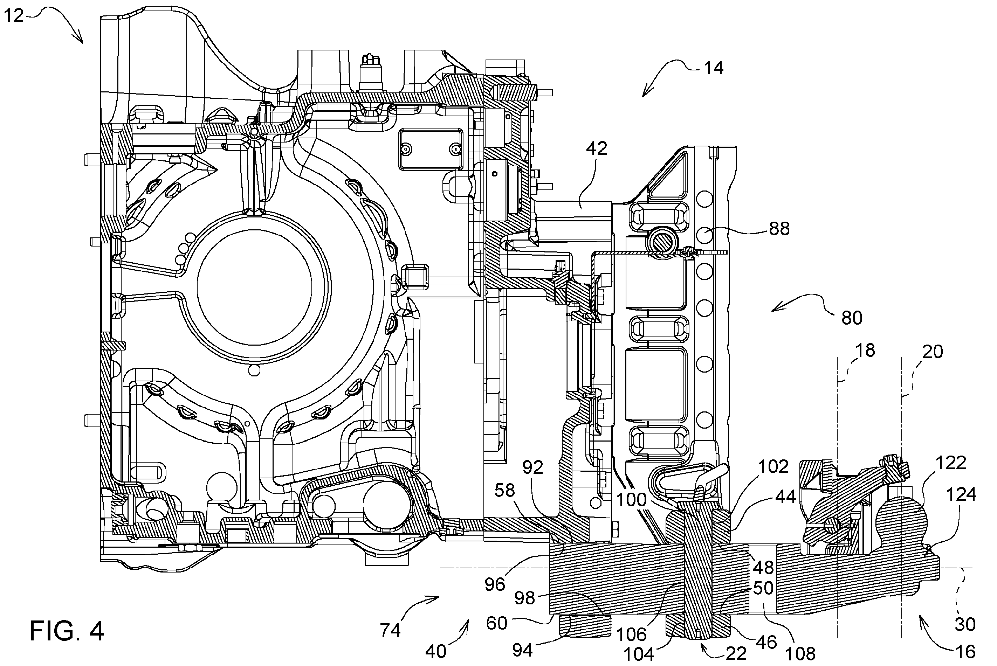

Die im Heckbereich 14 des landwirtschaftlichen Traktors 12 befindliche Kupplungsanordnung 10 umfasst eine Zugstange 16, die sich ihrer Länge nach in verschiedene Kupplungspositionen 18, 20 verbringen und darin mittels eines Sicherungselements 22 festlegen lässt (siehe hierzu Fig. 3 und 4).

Genauer gesagt weist die als Stahlschmiedeteil hergestellte Zugstange 16 einen ersten Stangenabschnitt 24 und einen dem ersten Stangenabschnitt 24 gegenüberliegenden zweiten Stangenabschnitt 26 auf. Der erste Stangenabschnitt 24 ist in einer Halterung 28 entlang eines vorgegebenen bzw. zulässigen Verstellbereichs ΔL längsverschiebbar gelagert.

Wie insbesondere in Fig. 1 in Verbindung mit Fig. 3 bzw. 4 zu erkennen ist, umfasst die Halterung 28 eine quer zur Längserstreckung 30 der Zugstange 16 verlaufende Stützplatte 32, die sich brückenförmig zwischen zwei Montageabschnitten 34, 36 erstreckt und mittels mehrerer Gewindebolzen 38 auf einer Unterseite 40 eines Zapfwellengetriebegehäuses 42 des landwirtschaftlichen Traktors 12 verschraubt ist. Der zweite Stangenabschnitt 26 ist innerhalb angrenzender oberer und unterer Stützwangen 44, 46 bzw. daran ausgebildeter oberer und unterer Gleitflächen 48, 50 einer Kupplungsträgerplatte 52 weitgehend spielfrei geführt.

Die Zugstange 16 ist zumindest entlang des vorgegebenen bzw. zulässigen Verstellbereichs ΔL als innerhalb der Halterung 28 aufrecht verlaufendes I-Profil bzw. Doppel-T-Profil 54 mit durch einen Steg 56 verbundenen oberen und unteren Flanschen 58, 60 ausgebildet. Linke und rechte Wangen bzw. Innenvorsprünge 62, 64 an der Halterung 28 sind derart auf beiden Seiten des Stegs 56 des Doppel-T-Profils 54 positioniert, dass eine Lateralführung der Zugstange 16 innerhalb der Halterung 28 gebildet ist. Hierzu enden die an den Montageabschnitten 34, 36 der Halterung 28 einstückig ausgeformten Wangen bzw. Innenvorsprünge 62, 64 im Bereich daran ausgebildeter Gleitflächen 66, 68 mit möglichst geringem Abstand gegenüber einer an einer jeweils angrenzenden Außenseite des Stegs 56 vorgesehenen Lauffläche 70, 72.

Vorliegend ist der Verstellbereich ΔL bis zum offenen Ende 74 des ersten Stangenabschnitts 24 hin fortgeführt, sodass sich die Zugstange 16 vollständig aus der Halterung 28 herausziehen lässt. Dies erlaubt es, die Zugstange 16 im Falle ihres Nichtgebrauchs oder eines wartungsbedingten Austauschs ohne Demontage der Halterung 28 aus der Kupplungsanordnung 10 vollständig zu entfernen.

Des Weiteren sind an der Kupplungsträgerplatte 52 linke und rechte Kufen 76, 78 zur Aufnahme in einem Schienensystemträger 80 eines Traktorkupplungssystems 82 ausgebildet. Der Schienensystemträger 80 weist die Gestalt eines im Heckbereich 14 des landwirtschaftlichen Traktors 12 am Zapfwellengetriebegehäuse 42 montierten Anhängebocks 84 auf (vgl. Fig. 3 und 4). Der Anhängebock 84 umfasst linke und rechte Rasterschienen 86, 88, in die die Kufen 76, 78 der Kupplungsträgerplatte 52 eingeführt und mittels mehrerer Gewindebolzen 90a, 90b verschraubt sind.

Wie anhand der Schnittdarstellungen der Kupplungsanordnung 10 in Fig. 3 bzw. 4 ersichtlich ist, lässt sich die Zugstange 16 durch Längsverschiebung in eine der Kupplungspositionen 18, 20 verbringen und darin gegenüber der Kupplungsträgerplatte 52 mittels des Sicherungselements 22 arretieren. Beispielsgemäß sind zwei Kupplungspositionen 18, 20 vorgesehen, es kann sich aber auch um eine beliebige andere Anzahl mit gegebenenfalls abweichender Rasterung handeln.

Mittels des Sicherungselements 22 wird die Zugstange 16 innerhalb der Kupplungsträgerplatte 52 bezüglich der Einbaulage am landwirtschaftlichen Traktor 12 horizontal sowohl in Längswie auch Querrichtung arretiert. Die vertikale Abstützung der Zugstange 16 erfolgt im Wesentlichen mittels der an den zweiten Stangenabschnitt 26 angrenzenden oberen und unteren Stützwangen 44, 46 der Kupplungsträgerplatte 52. Im Bereich der Halterung 28 treten bei Verwendung am landwirtschaftlichen Traktor 12 in erster Linie seitwärts gerichtete Zugkraftanteile auf, die aufgrund der mittels der Wangen bzw. Innenvorsprünge 62, 64 verwirklichten Lateralführung der Zugstange 16 in die Halterung 28 und von dort in das Zapfwellengetriebegehäuse 42 eingeleitet werden.

Um eine möglichst gleichmäßige Einleitung der an der Zugstange 16 betriebsbedingt auftretenden Vertikalkräfte in die der Halterung 28 bzw. Kupplungsträgerplatte 52 angrenzenden Tragestrukturen des landwirtschaftlichen Traktors 12 sicherzustellen, ist zur Bildung einer Gleitführung entlang des vorgegebenen bzw. zulässigen Verstellbereichs ΔL an einer Außenseite des oberen und/oder unteren Flanschs 58, 60 eine ebene Lauffläche 92, 94 zur Anlage an einer ebenen Gegenfläche 96, 98 an der Unterseite 40 des Zapfwellengetriebegehäuses 42 bzw. der Halterung 28 vorgesehen.

Im vorliegenden Fall handelt es sich bei dem Sicherungselement 22 um einen gewindelosen Sicherungsbolzen 100, der sich zur Arretierung der Zugstange 16 durch in der Kupplungsträgerplatte 52 sowie dem zweiten Stangenabschnitt 26 ausgebildete miteinander fluchtende Positionieröffnungen 102, 104, 106, 108 hindurchführen und darin mittels eines (nicht gezeigten) Splints sichern lässt. Die Positionieröffnungen 102, 104, 106, 108 verlaufen im Wesentlichen senkrecht zur Längserstreckung 30 der Zugstange 16, wobei mehrere Positionieröffnungen 106, 108 beabstandet entlang des zweiten Stangenabschnitts 26 entsprechend der jeweils zugehörigen Kupplungsposition 18, 20 der Zugstange 16 vorgesehen sind.

An dem mit einem Handgriff 110 versehenen Sicherungsbolzen 100 ist ein umlaufender Kragen 112 ausgebildet, der sich in montiertem Zustand an einer Oberseite 114 der Kupplungsträgerplatte 52 abstützt und daran mittels einer Verdrehsicherung 116 festgelegt ist, sodass die Einhaltung einer definierten Betriebsstellung des Handgriffs 110 gewährleistet ist. Die Verdrehsicherung 116 ist beispielsgemäß durch eine an dem umlaufenden oberen Kragen 112 vorgesehene Abflachung 118 gebildet, an der ein an der Oberseite 114 der Kupplungsträgerplatte 52 vorgesehener Anschlag 120 angreift.

Ferner ist an dem zweiten Stangenabschnitt 26 ein mit einem Kugelkopf 122 ausgestattetes Kupplungselement 124 angebracht (siehe unter anderem Fig. 1). Vorliegend handelt es sich um einen sogenannten K80-Kugelkopf, der der Anbringung einer (nicht gezeigten) komplementären Kugelpfanne einer Anbaugerätekupplung dient. Der Kugelkopf 122 ist an dem zweiten Stangenabschnitt 26 bzw. dem Kupplungselement 124 für die Zwecke eines wartungs- bzw. verschleißbedingten Austauschs abnehmbar montiert.

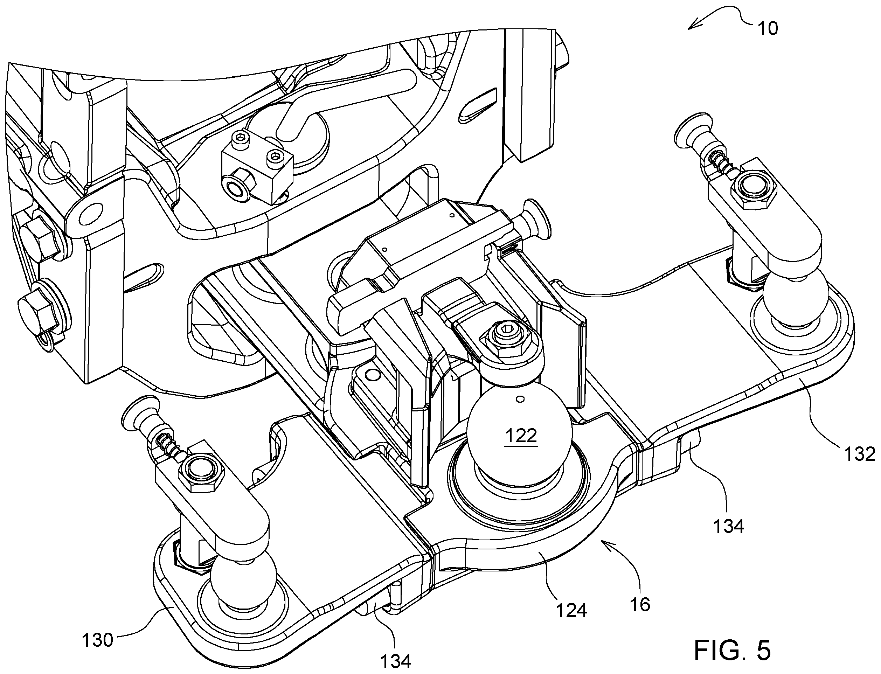

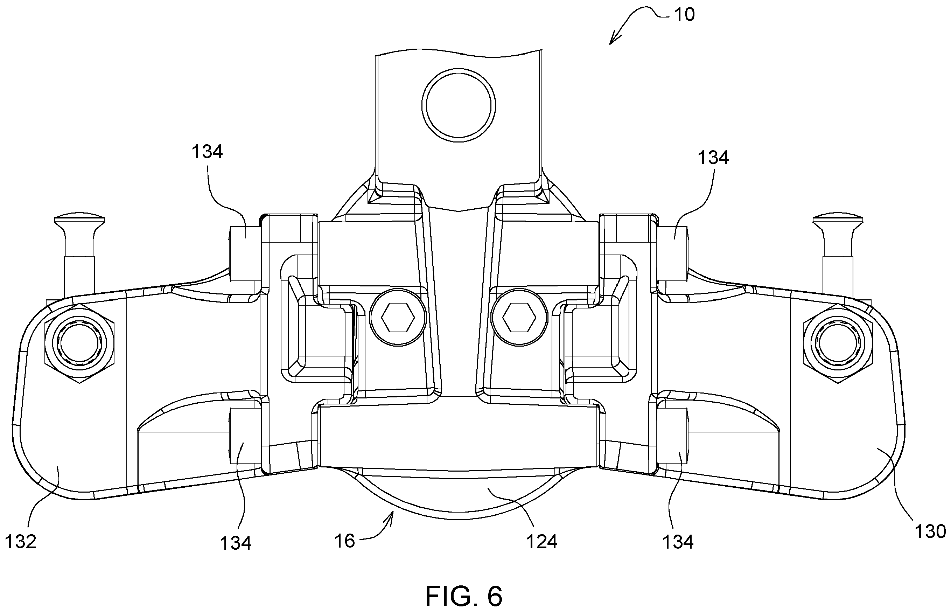

Des Weiteren sind an dem zweiten Stangenabschnitt 26 linke und rechte taschenförmige Ausnehmungen 126, 128 vorgesehen, die zur Herstellung einer lösbaren Schwalbenschwanzverbindung mit linken und rechten Zusatzkupplungselementen 130, 132 zur Betätigung einer von einem (nicht gezeigten) lenkbaren Anbaugerät umfassten Zwangslenkung ausgebildet sind. Dieser komplettierte Zustand ist in Fig. 5 wiedergegeben. Demgemäß trägt jedes der Zusatzkupplungselemente 130, 132 eine K50-Kugel, in die sich ein Lenkbetätigungsgestänge der Zwangslenkung einhängen lässt. Zur Sicherung der Schwalbenschwanzverbindung wird jedes der beiden Zusatzkupplungselemente 130, 132 zusätzlich mit dem zweiten Stangenabschnitt 26 mittels mehrerer Gewindebolzen 134 fest verschraubt. Bei dem lenkbaren Anbaugerät handelt es sich beispielsweise um einen Transportanhänger oder ein Güllefass. Fig. 6 zeigt insofern die Kupplungsanordnung 10 von unten.

Der Vollständigkeit halber sei angemerkt, dass im vorliegenden Zusammenhang verwendete Richtungs- bzw. Verlaufsangaben sich jeweils auf die zum Betrieb der Kupplungsanordnung 10 am landwirtschaftlichen Traktor 12 vorgesehene Einbaulage beziehen.

## Patentansprüche

1. Kupplungsanordnung für einen landwirtschaftlichen Traktor, umfassend eine Zugstange (16) mit einem ersten Stangenabschnitt (24), der in einer Halterung (28) zur Anbringung auf einer Unterseite (40) eines Zapfwellengetriebegehäuses (42) des landwirtschaftlichen Traktors (12) entlang eines vorgegebenen Verstellbereichs längsverschiebbar gelagert ist, und einen dem ersten Stangenabschnitt (24) gegenüberliegenden zweiten Stangenabschnitt (26), der innerhalb angrenzender oberer und unterer Stützwangen (44, 46) einer Kupplungsträgerplatte (52) geführt ist und sich darin mittels eines Sicherungselements (22) in einer von mehreren Kupplungspositionen (18, 20) entlang des vorgegebenen Verstellbereichs festlegen lässt, **dadurch gekennzeichnet, dass** die Zugstange (16) zumindest entlang des vorgegebenen Verstellbereichs als innerhalb der Halterung (28) aufrecht verlaufendes Doppel-T-Profil (54) mit durch einen Steg (56) verbundenen oberen und unteren Flanschen (58, 60) ausgebildet ist, wobei linke und rechte Innenvorsprünge (62, 64) an der Halterung (28) derart auf beiden Seiten des Stegs (56) des Doppel-T-Profils (54) positioniert sind enden, dass eine Lateralführung der Zugstange (16) innerhalb der Halterung (28) gebildet ist.

2. Kupplungsanordnung nach Anspruch 1, **dadurch gekennzeichnet, dass** der Verstellbereich bis zum offenen Ende (74) des ersten Stangenabschnitts (24) hin fortgeführt ist.

3. Kupplungsanordnung nach Anspruch 1 oder 2, **dadurch gekennzeichnet, dass** zur Bildung einer Gleitführung entlang des vorgegebenen Verstellbereichs an einer Außenseite des oberen und/oder unteren Flanschs (58, 60) eine ebene Lauffläche (92, 94) zur Anlage an einer Unterseite (40) des Zapfwellengetriebegehäuses (42) bzw. einer ebenen Gegenfläche (96, 98) an der Halterung (28) vorgesehen ist.

4. Kupplungsanordnung nach wenigstens einem der vorhergehenden Ansprüche, **dadurch gekennzeichnet, dass** es sich bei dem wenigstens einen Sicherungselement (22) um einen gewindelosen Sicherungsbolzen (100) handelt, der zur Arretierung der Zugstange (16) durch in der Kupplungsträgerplatte (52) sowie dem zweiten Stangenabschnitt (26) ausgebildete miteinander fluchtende Positionieröffnungen (102, 104, 106, 108) hindurchgeführt ist.

5. Kupplungsanordnung nach Anspruch 4, **dadurch gekennzeichnet, dass** an dem Sicherungsbolzen (100) ein umlaufender Kragen (112) ausgebildet ist, der sich in montiertem Zustand an einer Oberseite (114) der Kupplungsträgerplatte (52) abstützt und daran mittels einer Verdrehsicherung (116) festgelegt ist.

6. Kupplungsanordnung nach wenigstens einem der vorhergehenden Ansprüche, **dadurch gekennzeichnet, dass** an der Kupplungsträgerplatte (52) linke und rechte Kufen (76, 78) zur Aufnahme in einem Schienensystemträger (80) eines Traktorkupplungssystems (82) ausgebildet sind.

7. Kupplungsanordnung nach wenigstens einem der vorhergehenden Ansprüche, **dadurch gekennzeichnet, dass** an dem zweiten Stangenabschnitt (26) ein Kupplungselement (124) angebracht ist.

8. Kupplungsanordnung nach wenigstens einem der vorhergehenden Ansprüche, **dadurch gekennzeichnet, dass** an dem zweiten Stangenabschnitt (26) linke und rechte taschenförmige Ausnehmungen (126, 128) vorgesehen sind, die zur Herstellung einer lösbaren Schwalbenschwanzverbindung mit linken und rechten Zusatzkupplungselementen (130, 132) zur Betätigung einer von einem lenkbaren Anbaugerät umfassten Zwangslenkung ausgebildet sind.

## Claims

1. Coupling arrangement for an agricultural tractor, comprising a drawbar (16) having a first bar section (24), which is mounted in a longitudinally movable manner along a predefined adjustment region in a holder (28) for attachment to an underside (40) of a power-take-off transmission housing (42) of the agricultural tractor (12), and a second bar section (26), which is situated opposite the first bar section (24) and is guided within adjacent upper and lower supporting cheeks (44, 46) of a coupling carrier plate (52) and can be fixed therein in one of a plurality of coupling positions (18, 20) along the predefined adjustment region by means of a securing element (22), **characterized in that**, at least along the predefined adjustment region, the drawbar (16) is designed as an I profile (54) which runs upright within the holder (28) and has upper and lower flanges (58, 60) which are connected by a web (56), wherein left and right inner protrusions (62, 64) on the holder (28) are positioned or end on both sides of the web (56) of the I profile (54) in such a manner that a lateral guidance of the drawbar (16) within the holder (28) is formed.

2. Coupling arrangement according to Claim 1, **characterized in that** the adjustment region is continued as far as the open end (74) of the first bar section (24).

3. Coupling arrangement according to Claim 1 or 2, **characterized in that**, in order to form a sliding guide along the predefined adjustment region, a flat running surface (92, 94) is provided on an outer side of the upper and/or lower flange (58, 60) for contact with an underside (40) of the power-take-off transmission housing (42) or a flat countersurface (96, 98) on the holder (28).

4. Coupling arrangement according to at least one of the preceding claims, **characterized in that** the at least one securing element (22) is a threadless securing bolt (100), which is passed through mutually aligned positioning openings (102, 104, 106, 108), which are formed in the coupling carrier plate (52) and the second bar section (26), in order to lock the drawbar (16).

5. Coupling arrangement according to Claim 4, **characterized in that** a circumferential collar (112) is formed on the securing bolt (100) and, in the mounted state, is supported on an upper side (114) of the coupling carrier plate (52) and fixed thereon by means of a rotation lock (116).

6. Coupling arrangement according to at least one of the preceding claims, **characterized in that** left and right runners (76, 78) for reception in a rail system carrier (80) of a tractor coupling system (82) are formed on the coupling carrier plate (52).

7. Coupling arrangement according to at least one of the preceding claims, **characterized in that** a coupling element (124) is attached to the second bar section (26).

8. Coupling arrangement according to at least one of the preceding claims, **characterized in that** on the second bar section (26) left and right pocket-shaped recesses (126, 128) are provided, which are designed for the production of a releasable dovetail connection with left and right auxiliary coupling elements (130, 132) for actuating a forced steering system comprised by a steerable attachment.

## Revendications

1. Ensemble d'attelage pour un tracteur agricole comprenant une barre de traction (16) avec une première section de barre (24), qui est montée de manière à pouvoir coulisser longitudinalement dans un support (28) pour être installée sur un côté inférieur (40) d'un carter de boîte de vitesses de PDF (42) du tracteur agricole (12) le long d'une plage de réglage prédéfinie, et une deuxième section de barre (26) opposée à la première section de barre (24), qui est guidée à l'intérieur de joues de support (44, 46) supérieure et inférieure adjacentes d'une plaque porte-attelage (52) et peut y être fixée au moyen d'un élément de blocage (22) dans une de plusieurs positions d'attelage (18, 20) le long de la plage de réglage prédéfinie, **caractérisé en ce que** la barre de traction (16) est formée au moins le long de la plage de réglage prédéfinie sous la forme d'un double profil en T (54) s'étendant à la verticale à l'intérieur du support (28) avec des brides supérieure et inférieure (58, 60) reliées par une âme (56), des parties faisant saillie intérieures gauche et droite (62, 64) étant positionnées sur le support (28) des deux côtés de l'âme (56) du double profil en T (54) de telle manière qu'un guidage latéral de la barre de traction (16) est formé à l'intérieur du support (28).

2. Ensemble d'attelage selon la revendication 1, **caractérisé en ce que** la plage de réglage se prolonge jusqu'à l'extrémité ouverte (74) de la première section de tige (24).

3. Ensemble d'attelage selon la revendication 1 ou 2, **caractérisé en ce qu'**une surface de roulement plate (92, 94) est prévue pour venir en appui sur un côté inférieur (40) du carter de boîte de vitesses de PDF (42) ou une contre-surface plate (96, 98) sur le support (28) pour former un guide coulissant le long de la plage de réglage prédéfinie sur un côté extérieur de la bride supérieure et/ou inférieure (58, 60).

4. Ensemble d'attelage selon au moins l'une des revendications précédentes, **caractérisé en ce que** l'au moins un élément de blocage (22) est un boulon de blocage (100) sans filetage, qui est guidé à travers des ouvertures de positionnement (102, 104, 106, 108) alignées entre elles formées dans la plaque porte-attelage (52) ainsi que dans la deuxième section de tige (26) pour arrêter la barre de traction (16).

5. Ensemble d'attelage selon la revendication 4, **caractérisé en ce qu'**un collet périphérique (112) est formé sur le boulon de blocage (100), qui s'appuie dans l'état monté sur un côté supérieur (114) de la plaque porte-attelage (52) et est fixé sur celui-ci au moyen d'un système de blocage anti-rotation (116).

6. Ensemble d'attelage selon au moins l'une des revendications précédentes, **caractérisé en ce que** des patins gauche et droit (76, 78) destinés à être reçus dans un support de système de rails (80) d'un système d'attelage de tracteur (82) sont formés sur la plaque porte-attelage(52).

7. Ensemble d'attelage selon au moins l'une des revendications précédentes, **caractérisé en ce qu'**un élément d'attelage (124) est installé sur la deuxième section de tige (26).

8. Ensemble d'attelage selon au moins l'une des revendications précédentes, **caractérisé en ce que** sont prévus sur la deuxième section de tige (26) des évidements (126, 128) en forme de poche gauche et droite, qui sont formés pour établir une liaison en queue d'aronde détachable avec des éléments d'attelage supplémentaires gauche et droit (130, 132) pour actionner une direction forcée comprise par un accessoire dirigeable.
